# EUROPÄISCHE PATENTSCHRIFT

(11) **EP 3 785 988 B1**
(45) Veröffentlichungstag und Bekanntmachung des Hinweises auf die Patenterteilung: **07.06.2023**
(21) Anmeldenummer: 20193209.2
(22) Anmeldetag: 27.08.2020
(51) Int. Cl.: B60P 3/08

(54) **FAHRZEUGTRANSPORTER**
VEHICLE TRANSPORTER
TRANSPORTEUR DE VÉHICULES

(30) Priorität: 29.08.2019 DE 102019123202
(43) Veröffentlichungstag der Anmeldung: 03.03.2021
(73) Patentinhaber: Kässbohrer Transport Technik GmbH, 5301 Eugendorf (AT)
(72) Erfinder: Eberhartinger, Alexander, 5300 Hallwang (AT)
(74) Vertreter: HGF

(56) Entgegenhaltungen:
- EP-B1- 0 595 051
- CN-U- 208 867 929
- FR-A1- 3 071 449

## Beschreibung

Die vorliegende Erfindung betrifft einen Fahrzeugtransporter.

Die EP 05 95 051 B1 offenbart einen Fahrzeugtransporter mit zwei übereinander angeordneten Plattformen. Die obere Ladeplattform weist mehrere an Längsträgern angeordnete Tragevorrichtungen auf, die zur Aufnahme eines einzelnen Fahrzeuges ausgebildet sind und sowohl nach oben als auch nach unten schwenkbar ausgebildet sind. Einzelne Tragevorrichtungen können mit einem Knickgelenk versehen sein, wodurch die darauf stehenden Fahrzeuge abgesenkt werden können.

Aus der US 3,343,865 geht ebenfalls ein Fahrzeugtransporter hervor. Eine hintere Tragevorrichtung kann mit einen Hydrauliksystem geschwenkt werden und ist über eine Kolbenstange mit der restlichen oberen Tragevorrichtung verbunden.

In der US 6,287,061 B1 ist ein Transportfahrzeug mit einer oberen Plattform offenbart. Die obere Plattform weist mehrere Segmente auf, welche von mehreren vertikalen Säulen getragen wird. Jede dieser vertikalen Säulen kann in der Länge individuell eingestellt werden, wodurch sich die obere Plattform anheben oder absenken lässt. Die Form der oberen Plattform ist dadurch beliebig einstellbar.

Aus der EP 04 24 296 B1 geht eine mehrteilige Ladeplattform für Fahrzeugtransporter hervor. Die zusammengesetzte Ladeplattform weist eine bewegliche obere Brücke, sowie zwei neigbare Tragevorrichtungen auf.

Die EP 09 06 848 A1 offenbart einen Transportfahrzeugträger mit einer Ladeplattform. Auf der Ladeplattform sind Tragevorrichtungen angeordnet. Fahrzeuge können auf diesen Tragevorrichtungen gestellt werden, die zumindest teilweise nach oben kippbar sind. Fahrzeuge können so einzeln nach oben gekippt werden, wodurch die Kapazität des Transportfahrzeuges und die Gewichtsverteilung der Ladung sich ändert.

Aus der EP 1 661 756 B1 geht ein Autotransporter sowie Gelenkzug mit einem solchen Autotransporter hervor. Der Autotransporter weist einen Rahmen mit mehrere Ladeplattformen auf. Tragevorrichtungen an den Ladeplattformen sind zum Teil schwenkbar. Auf jeder dieser Tragevorrichtung kann ein Fahrzeug positioniert werden.

Weitere Fahrzeugtransporter und Fahrzeugtransportanhänger gehen aus der US 5,344,266, US 4,668,142, US 4,797,049, US 5,080,541, US 2005/0214092 A1, US 2,492,829, US 2,684,264, CN 20 28 07 548 U, US 3,994,523, US 4,759,668, DE 20 2010 014 446 U1, US 2,146,567, bei denen sich die Fahrzeuge auf individuellen Tragevorrichtungen befinden. Die Tragevorrichtungen können voneinander getrennt ausgerichtet werden. Die Tragevorrichtungen können hierbei zusammenhängend, zweigeteilt (vorne/hinten oder links/rechts) oder viergeteilt (pro Autoreifen) ausgeführt sein. Je nach Teilung unterscheiden sich die Einstellungsmöglichkeiten.

Aus der DE 10 2011 002 207 A1 geht ein Transportfahrzeug mit einer Zugmaschine und einem Aufbau oder Anhänger hervor, bei welchem eine Achse des Aufbaus oder Anhängers so breit ist, dass ein Transportgut/PKW teilweise zwischen die Reifen der Achse eintauchen kann.

Die CN 208 867929 U betrifft einen Fahrzeugtransporter mit zwei parallelen vorderen Längsträgern und zwei parallelen hinteren Längsträgern, die von dreimal zwei Stützen gestützt werden. Die vorderen und hinteren Längsträger sind jeweils mittels Gelenken miteinander verbunden. Da diese Gelenke nicht arretierbar ausgebildet sind, sind die Gelenke zum Fixieren und Einstellen mit den mittleren Stützen verbunden. Die mittleren Stützen umfassen neben Hydraulikkolben noch lagebeschränkende Strukturen. Die lagebeschränkenden Strukturen umfassen äußere Röhren und innere Hülsen, die jeweils Stiftlöcher aufweisen, wobei die äußeren Röhren mittels Positionierstiften in den inneren Hülsen fixiert werden können und so die Position der Gelenke fixieren. Die Gelenke bleiben hierbei in Richtung ihrer Drehachse drehbar.

Aus der FR 3 071 449 A1 geht eine Ladeplattform hervor, die schwenkbar ausgebildet ist. Die Ladeplattform weist eine erste Endstützzone mit einem korbartigen Querträger auf. Der korbartige Querträger verbindet zwei Seitenelemente miteinander. Der korbartige Querträger ist beweglich an den Seitenelementen angeordnet und kann aus den Seitenelementen herausgezogen werden.

Bei Fahrzeugtransportern besteht grundsätzlich das Bestreben, diese mit möglichst vielen Fahrzeugen beladen zu können. Es gibt jedoch gesetzliche Regelungen, welche der Beladung von Fahrzeugtransportern mit Fahrzeugen Grenzen setzen. Beispielsweise ist es in den meisten Staaten in Europa nicht erlaubt, dass die Ladung mehr als vier Meter über den Untergrund, auf dem der Fahrzeugtransporter steht, nach oben vorsteht. Diese Beladungsgrenzen sind jedoch in den einzelnen Staaten unterschiedlich. Daher hat man, wie eingangs erläutert, bereits unterschiedliche Typen von Fahrzeugtransportern entwickelt, um diese möglichst flexibel mit unterschiedlichen Fahrzeugen beladen zu können.

Der Erfindung liegt die Aufgabe zugrunde, einen Fahrzeugtransporter mit einer unteren und zumindest einer oberen Ladeebene zu schaffen, so dass Fahrzeuge in einer Vielzahl unterschiedlicher Anordnungen auf dem Fahrzeugtransporter geladen werden können und der Fahrzeugtransporter sehr einfach ausgebildet ist.

Die Aufgabe wird durch einen Fahrzeugtransporter mit den Merkmalen des Anspruchs 1 gelöst. Vorteilhafte Ausgestaltungen sind in den jeweiligen Unteransprüchen angegeben.

Ein erfindungsgemäßer Fahrzeugtransporter ist mit einer unteren und zumindest mit einer oberen Ladeebene ausgebildet, wobei die obere Ladeebene umfasst
- zumindest eine Trageinrichtung zum Aufnehmen von Fahrzeugen,
- zwei parallel verlaufende Längsträger, welche etwa in Längsrichtung des Fahrzeugtransporters verlaufen und zwischen welchen die Trageinrichtung angeordnet und daran befestigt ist,
- zumindest eine vordere Stützeinrichtung und zumindest eine hintere Stützeinrichtung, welche die Längsträger stützen,
- wobei die Längsträger schwenkbar mit den Stützeinrichtungen verbunden sind.

Der Fahrzeugtransporter zeichnet sich dadurch aus, dass die Längsträger jeweils ein Gelenk aufweisen, welche in Querrichtung des Fahrzeugtransporters einander gegenüberliegend und im Bereich zwischen der vorderen Stützeinrichtung und der hinteren Stützeinrichtung angeordnet sind, wobei die Gelenke mit einer Fixiereinrichtung zum Fixieren der Gelenkposition fixierbar ausgebildet sind.

Da die Längsträger mit dem Gelenk versehen sind, können sie abschnittsweise mit unterschiedlicher Neigung gegenüber einer Horizontalen angeordnet werden. Da das Gelenk fixierbar ausgebildet ist, kann die Anordnung der unterschiedlich geneigten Abschnitte der Längsträger fixiert werden. Hierdurch wird auf einfache Art und Weise ein zusätzlicher Freiheitsgrad in der Ausrichtung der Trageinrichtung der oberen Ladeebene zur Verfügung gestellt. Wie es anhand der unten näher erläuterten Beispiele erkennbar ist, bewirkt dieser zusätzliche Freiheitsgrad eine hohe Flexibilität in der Anordnung der Trageinrichtung der oberen Ladeebene bezüglich der unteren Ladeebene, so dass unterschiedlichste Fahrzeugtypen in großer Anzahl und unter Berücksichtigung der gesetzlichen Vorgaben zuverlässig auf dem Fahrzeugtransporter geladen werden können.

Bei einem herkömmlichen Fahrzeugtransporter, wie er beispielsweise aus der EP 595 051 B1 bekannt ist, können einzelne Fahrzeuge auch individuell zueinander ausgerichtet werden, indem Plattformen der Trageinrichtung, auf welchen sich jeweils ein Fahrzeug befindet, individuell neigbar, bezüglich der Längsträger absenkbar und sogar knickbar ausgebildet sind. Hierdurch wird auch eine hohe Flexibilität in der Beladung des Fahrzeugtransporters erzielt. Diese Konstruktion ist zum einen sehr aufwändig, da eine jede Plattform mit einer Vielzahl von Aktuatoren zu versehen ist, damit die Plattform individuell bezüglich der Längsträger bewegt werden kann. Zudem ist ein Absenken der Plattform bezüglich der Längsträger nur bei Fahrzeugen möglich, welche ausreichend schmal sind, so dass sie zwischen den Längsträgern und den daran befestigten Hubeinrichtungen Platz haben. Bei Fahrzeugen, welche so breit sind, dass sie die Längsträger berühren würden, ist ein Absenken der Plattformen bezüglich der Längsträger nicht möglich. Durch das erfindungsgemäße Knicken der Längsträger kann die Trageinrichtung, auf welchen sich ein Fahrzeug befinden kann, zusammen mit den Längsträgern abgesenkt werden, so dass dies auch für Fahrzeuge möglich ist, welche breiter als die lichte Weite zwischen den beiden Längsträgern sind. Daher können mit dem erfindungsgemäßen Fahrzeugtransporter auf der oberen Ladeebene auch Traktoren, kleine Lastkraftwagen oder große SUVs verladen werden.

Ein weiterer Vorteil der knickbar ausgebildeten Längsträger liegt darin, dass bei abgesenkter oberer Ladeebene zur Beladung des Fahrzeugtransporters der hintere Abschnitt der oberen Ladeebene nach hinten etwas stärker abfallend geneigt angeordnet werden kann als der vordere Abschnitt der oberen Ladeebene, so dass zusätzliche Auffahrschienen, welche sich vom Untergrund, auf dem der Fahrzeugtransporter steht, schräg nach oben zum hinteren Ende der oberen Ladeebene erstrecken, einen geringeren Knick zur Trageinrichtung des Fahrzeugtransporters als bei herkömmlichen Fahrzeugtransportern mit nicht-knickbaren Längsträgern ausbilden. Dies erlaubt beim Beladen die in Fahrtrichtung vorderen Abschnitte der oberen Ladeebene stärker abzusenken als bei Fahrzeugtransportern ohne knickbare Längsträger, da der vordere Abschnitt der oberen Ladeebene gegenüber dem hinteren Abschnitt der oberen Ladeebene abgewinkelt angeordnet ist. Eine Reduzierung der Höhe der oberen Ladeebene beim Beladen vereinfacht die beim Beladen notwendigen Tätigkeiten, wie zum Beispiel das Verzurren des Kraftfahrzeuges, da dies bei wesentlich geringer Höhe und sogar vom Boden aus ausgeführt werden kann. Zudem ist es wesentlich sicherer, wenn diese Tätigkeiten in geringer Höhe durchgeführt werden.

Eine niedrige Höhe der oberen Ladeebene beim Beladen erlaubt es auch eine Absturzsicherung wegzulassen, welche die maximale Breite der zu beladenden Fahrzeuge begrenzt.

Fahrzeugtransporter im Sinne der vorliegenden Erfindung können sowohl als Fahrzeugtransporter ausgebildete Anhänger (ohne eigenen Antrieb) als auch als Fahrzeugtransporter ausgebildete Lastkraftwagen (mit eigenem Antrieb) sein.

Es kann ein Knickaktuator zum gesteuerten Abwinkeln der Längsträger vorgesehen sein. Ein solcher Knickaktuator kann beispielsweise ein Hydraulikzylinder, ein Spindelantrieb, ein Hydraulikdrehmotor oder ein Elektromotor mit Getriebe sein. Hierdurch ist es möglich, die Längsträger mittels einer Fernsteuerung gesteuert abzuwinkeln. Eine Fixiereinrichtung zum Fixieren der Gelenkposition kann unabhängig vom Knickaktuator ausgebildet sein. Die Fixiereinrichtung kann jedoch auch in den Knickaktuator integriert sein, wie zum Beispiel bei einem Hydraulikzylinder mit Verriegelungseinrichtung oder einem Hydraulikdrehmotor mit Bremse. Die Verriegelungseinrichtung des Hydraulikzylinders bzw. die Bremse des Hydraulikdrehmotors bilden die Fixiereinrichtung.

Die Längsträger weisen jeweils einen vorderen und einen hinteren Längsträgerabschnitt auf, welche mit dem Gelenk verbunden sind und die Trageinrichtung kann zumindest eine vordere und eine hintere Plattform umfassen, wobei die vordere Plattform an den vorderen Längsträgerabschnitten und die hintere Plattform an den hinteren Längsträgerabschnitten befestigt ist. Die Plattformen weisen im Wesentlichen ebenflächige Tragelemente auf, welche als rechteckige Platten, die sich über den gesamten Bereich zwischen den Längsträgern erstrecken oder als schmale Schienen ausgebildet sein können, welche benachbart zu den Längsträgern angeordnet sind. Die Tragelemente können ein oder mehrere Durchgangslöcher aufweisen zur Aufnahme jeweils eines Rades. Die Löcher können mittels Querbalken abdeckbar sein und/oder es können Querstreben an den Durchgangslöchern vorgesehen sein, deren Position verändert werden kann, so dass die Größe der Durchgangslöcher entsprechend dem aufzunehmenden Rad einstellbar ist. Diese Durchgangslöcher dienen einerseits zum Fixieren der Räder und damit der Fahrzeuge auf der Trageinrichtung und andererseits zum Absenken des jeweiligen Fahrzeuges bezüglich der Ladeebene bzw. Trageinrichtung.

Zumindest eine und vorzugsweise alle der Plattformen können schwenkbar an den Längsträgern befestigt sein. Hierdurch wird ein weiterer Freiheitsgrad zur Anordnung von Fahrzeugen auf dem Fahrzeugtransporter bereitgestellt. Die Plattform ist vorzugsweise am in Fahrtrichtung vorderen oder hinteren Ende der Plattform schwenkbar an den Längsträgern befestigt. Die Plattform kann nach oben und/oder unten bezüglich der Längsträger schwenkbar ausgebildet sein. In der Praxis ist vor allem das Schwenken der Plattform nach oben bezüglich der Längsträger von Bedeutung, wobei in Einzelfällen es auch sinnvoll sein kann, wenn die Plattform unterhalb der Längsträger abgesenkt werden kann.

Eine oder mehrere Plattformen können auch in Längsrichtung verschiebbar ausgebildet sein. Hierdurch können Fahrzeuge, welche sich auf den jeweiligen Plattformen befinden, in Längsrichtung individuell positioniert werden.

Die Plattformen können mit ausziehbaren Schienen versehen sein. Insbesondere am rückwärtigen Ende der oberen Ladeebene sind derartige Schienen zweckmäßig. Sie dienen hierbei vor allem als Ladestützen, welche jeweils ein Rad eines Fahrzeuges während des Transportes stützen. Sie können auch schwenkbar (nach oben oder/und unten) ausgebildet sein, wobei es in einigen Ländern gesetzliche Entwicklungen gibt, welche schwenkbare Ladestützen am rückwärtigen Ende der oberen Ladeebene untersagen. Die Plattformen können mit einem Arretiermittel versehen sein, so dass die ausziehbaren Schienen in einer schrägen Stellung bezüglich der Plattform arretiert sind.

Die Plattformen können derart aneinander angrenzend anordbar sein, dass sie eine durchgehende Überfahrt bilden. In dieser Anordnung ist der Abstand zwischen den einzelnen Plattformen so gering, dass er mit den üblichen Rädern eines Fahrzeuges überfahren werden kann. Eine solche Überfahrt kann durchgehend von einem als Anhänger ausgebildeten Fahrzeugtransporter zu einem als Lastwagen ausgebildeten Fahrzeugtransporter ausgebildet sein, so dass die Fahrzeuge über die Ladeebene des Anhängers zur Ladeebene des Lastkraftwagens gefahren werden können.

Die vorderen oder hinteren Längsträgerabschnitte können mit einem Festlager und die entsprechend anderen Längsträgerabschnitte mit einem Loslager an den Stützeinrichtungen befestigt sein. Hierdurch wird sichergestellt, dass es zu keinen Verspannungen zwischen den Längsträgern und den Stützeinrichtungen beim Abwinkeln der Längsträger kommt.

Die Stützeinrichtungen sind vorzugsweise in der Höhe verstellbar ausgebildet. Die Stützeinrichtungen können Säulen oder Wandungen sein. An den Stützeinrichtungen können vertikal bewegbare Befestigungselemente für die Längsträger vorgesehen sein. Die Stützeinrichtungen können jedoch auch selbst in der Höhe veränderlich ausgebildet sein, wie zum Beispiel als teleskopierbare Stützen oder als im Bereich einer unteren Ladeebene schwenkbar angeordnete Stützen.

Die Stützeinrichtungen können so ausgebildet sein, dass sie die Längsträger von unten stützen, so dass sie nach oben nicht über die Längsträger hinaus vorstehen. Hierdurch ist die obere Ladeebene frei von seitlichen Beschränkungen, so dass auf der oberen Ladeebene Fahrzeuge angeordnet werden können, die sich seitlich über die Längsträger hinweg erstrecken. Vorzugsweise greifen die Stützeinrichtungen von unten an den Längsträgern an, wodurch die Längsträger ein Stück weiter außen im Vergleich zu einer Anordnung, bei welcher die Stützeinrichtungen seitlich an den Längsträgern befestigt sind, angeordnet werden können.

Ein jeder Längsträger kann auch zumindest zwei Gelenke aufweisen. Hierdurch ist ein Längsträger in zumindest drei Längsträgerabschnitte unterteilt, welche unabhängig voneinander geneigt werden können. Bei einer solchen Ausbildung der Längsträger kann jedem Paar von Längsträgerabschnitten eine separate Plattform der Trageinrichtung zugeordnet sein. Es kann jedoch auch zweckmäßig sein, relativ kurze Längsträgerabschnitte vorzusehen, welche vor allem zur Ausbildung einer Stufe dienen, wie es unten anhand eines Ausführungsbeispiels gezeigt wird.

Die Längsträger können teleskopierbar ausgebildet sein. Hierdurch kann einerseits die Länge der Ladeebene bzw. der Ladefläche nach Bedarf variiert werden. Ist der teleskopierbare Abschnitt der Längsträger im Bereich zwischen zwei Stützeinrichtungen angeordnet, so kann hierdurch auch eine Verspannung der Längsträger mit den Stützeinrichtungen beim Kippen derselben entgegengewirkt werden, womit es nicht notwendig ist, ein Loslager zwischen einem der Längsträgerabschnitte und einer der Stützeinrichtungen vorzusehen.

Da die Längsträger durch die Gelenke in zumindest zwei Längsträgerabschnitte unterteilt sind, sind die einzelnen Längsträgerabschnitte kürzer als herkömmliche Längsträger. Die herkömmlichen, sehr langen Längsträger sind aufgrund ihrer großen Länge sowohl in der Fertigung als auch in der Lagerhaltung sehr aufwändig und umständlich zu handhaben. Die kürzeren Längsträgerabschnitte können wesentlich einfacher gefertigt und vorgehalten werden.

Die Erfindung wird nachfolgend näher anhand der Zeichnungen erläutert. Die Zeichnungen zeigen in:
- Figur 1: einen Lastzug mit einem Lastkraftwagen und einem Anhänger, welche jeweils als Fahrzeugtransporter ausgebildet sind, wobei eine obere Ladeebene abgesenkt ist, in einer Seitenansicht,
- Figur 2: den Lastzug aus Figur 1 mit einer anderen Beladung und angehobener oberen Ladeebene in einer Seitenansicht,
- Figur 3a-c: das Gelenk mit einem Knickaktuator in drei verschiedenen Schwenkpositionen jeweils in einer Seitenansicht,
- Figur 4a-f: den Anhänger aus Figur 1 und 2, jeweils mit einer unterschiedlichen Beladung in einer Seitenansicht, und
- Figur 5: einen Fahrzeugtransporter in Form eines Anhängers mit Längsträgern, welche jeweils zwei Gelenke aufweisen, in einer Seitenansicht.

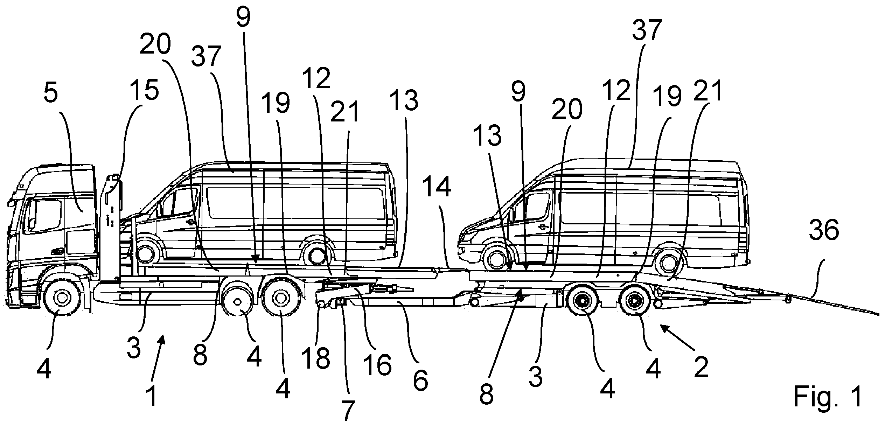

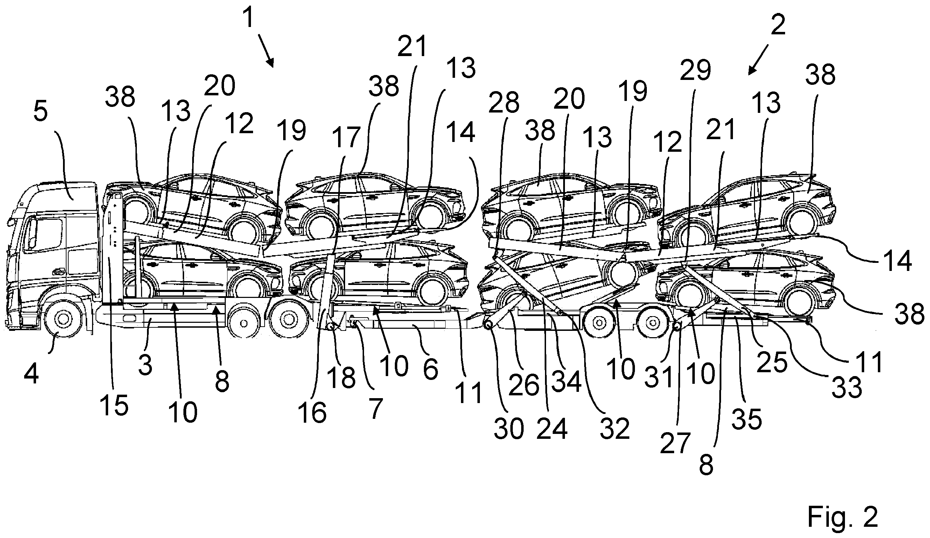

Nachfolgend wird die Erfindung anhand eines Lastzuges mit einem Lastkraftwagen 1 und einem Anhänger 2 erläutert, welche beide jeweils als Fahrzeugtransporter ausgebildet sind (Figur 1, Figur 2). Die Fahrzeugtransporter 1, 2 besitzen jeweils ein Chassis 3, an dem Räder 4 befestigt sind, mit welchen die Fahrzeugtransporter 1, 2 auf einem Untergrund aufliegen.

Der Lastkraftwagen 1 weist an seinem vorderen Ende ein Führerhaus 5 auf. Unterhalb des Führerhauses 5 ist ein Motor zum Antreiben des Lastkraftwagens 1 integriert.

Der Anhänger 2 weist an seinem vorderen Ende eine Deichsel 6 auf, mit welcher er über eine Kupplung 7 mit dem hinteren Ende des Lastkraftwagens 1 verbunden ist.

Diese beiden Fahrzeugtransporter 1, 2 weisen jeweils eine untere Ladeebene 8 und eine obere Ladeebene 9 auf. Der Begriff "Ebene" wird hier nicht im streng mathematischem Sinne verwendet, sondern im Sinne einer Fläche, welche auch konturiert und zerklüftet sein kann, wobei die beiden Ladeebenen 8, 9 zumindest ein Stück voneinander beabstandet sind, wenn auf beiden Ladeebenen Fahrzeuge angeordnet sind (Fig. 2).

Die untere Ladeebene 8 wird durch eine Trageinrichtung mit mehreren Plattformen 10 ausgebildet, welche an dem jeweiligen Chassis 3 befestigt sind. Die Plattformen 10 können starr an das jeweilige Chassis 3 integriert sein. Sie können jedoch auch schwenkbar und/oder in Längsrichtung verschiebbar und/oder mit ausziehbaren Schienen versehen sein. Die Plattformen am rückwärtigen Ende der Fahrzeugtransporter 1, 2 weisen nach hinten ausziehbare Schienen auf, welche auch als Ladestützen 11 bezeichnet werden und die beladbare Fläche nach hinten verlängern.

Die obere Ladeebene der beiden Fahrzeugtransporter 1, 2 wird durch zwei parallel angeordnete Längsträger 12 und einer dazwischen angeordneten Trageinrichtung mit mehreren Plattformen 13 gebildet.

Die Plattformen 13 können genauso wie die Plattformen 10 der unteren Ladeebene 8 schwenkbar an den Längsträgern befestigt sein und/oder in Längsrichtung verschiebbar ausgebildet sein und/oder mit ausziehbaren Schienen und insbesondere Ladestützen 14 am rückwärtigen Ende versehen sein.

Die Plattformen 10, 13 können so ausgebildet sein, wie es in der EP 3 293 048 A1 beschrieben und gezeigt ist. Deshalb wird auf die EP 3 283 048 A1 diesbezüglich vollinhaltlich Bezug genommen. Diese Plattformen 10, 13 können durchgehende Flächen bilden oder lediglich als Schienen angrenzend zu den Längsträgern 12 ausgebildet sein. Die Plattformen 10, 13 können Durchgangsöffnungen zur Aufnahme eines Rades aufweisen. Die Durchgangsöffnungen können mit Querbalken und/oder Querstreben vollständig oder teilweise abgedeckt werden. Die Querstreben sind stangenförmig und die Querbalken in der Draufsicht streifenförmig mit einer Breite von mehr als 10 cm ausgebildet. Die Querbalken und Querstreben dienen auch zur Einstellung der Größe der Durchgangsöffnungen, um diese an die Größe der Räder des aufzunehmenden Fahrzeuges anzupassen.

Sind die Plattformen 10, 13 schwenkbar und/oder verschiebbar, dann sind vorzugsweise pneumatisch oder elektrisch angetriebene Aktuatoren vorgesehen, um die Plattformen zu schwenken bzw. zu verschieben.

Die Längsträger 12 des Lastkraftwagens 1 sind mit ihrem vorderen Ende jeweils in einer Hubsäule 15 gelagert, so dass das vordere Ende der Längsträger 12 entlang den Hubsäulen 15 angehoben bzw. abgesenkt werden kann. Im rückwärtigen Bereich werden die Längsträger 12 von einer schwenkbar am Chassis 3 gelagerten Stütze 16 gestützt. Die Stützen 16 greifen von unten jeweils an den Längsträgern 12 an und sind mit diesen mit einem Loslager 17 schwenkbar verbunden. Werden die Stützen 16 um ihr Schwenkgelenk 18 nach hinten in die horizontale Stellung umgeschwenkt (Figur 1), dann wird der hintere Bereich der Längsträger 12 und damit die obere Ladeebene 9 abgesenkt (Figur 1). Da auch das vordere Ende der Längsträger 12 an der Hubsäule 15 abgesenkt werden kann, kann die obere Ladeebene 9 soweit abgesenkt werden, bis sie auf der unteren Ladeebene 8 aufliegt (Figur 1). Im vorliegenden Ausführungsbeispiel weist die obere Ladeebene 9 im maximal abgesenkten Zustand eine Höhe von ca. 1,3 m über dem Untergrund, auf dem der Lastkraftwagen 1 steht, auf. Kann in dieser Stellung der Lastkraftwagen 1 beladen werden, dann ist keine Absturzsicherung am Rand der oberen Ladeebene notwendig. Ist hingegen ein Beladen der oberen Ladeebene 9 nur bei einer Höhe von zumindest 2 m möglich, dann ist eine solche Absturzsicherung vorgeschrieben. Eine solche Absturzsicherung ist eine Art Geländer, welches an den seitlichen Rändern der oberen Ladeebene 9 angeordnet ist. Eine Absturzsicherung beschränkt die maximale Breite der Fahrzeuge, welche auf die obere Ladeebene 9 geladen werden können. Dadurch, dass zum Beladen die obere Ladeebene 9 vollständig abgesenkt werden kann, und wie es unten noch näher erläutert wird, eine ununterbrochene Überfahrt über den Anhänger 2 auf den Lastkraftwagen 1 geschaffen wird, kann eine solche Absturzsicherung entfallen und die obere Ladeebene 9 mit entsprechend breiten Fahrzeugen beladen werden.

Die Längsträger 12 des Lastkraftwagens 1 weisen etwa in ihrer Längsmitte ein Gelenk 19 auf, so dass die Längsträger 12 jeweils einen vorderen Längsträgerabschnitt 20 und einen hinteren Längsträgerabschnitt 21 ausbilden.

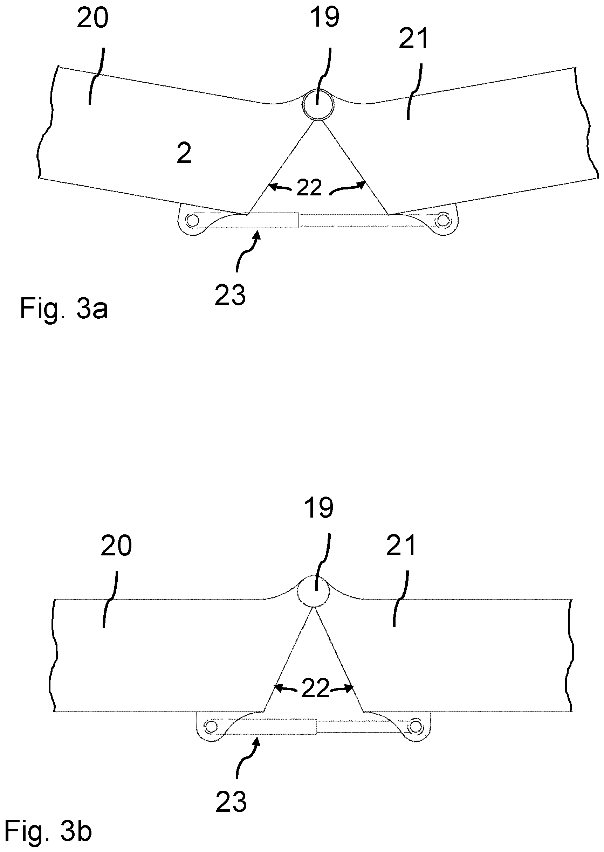

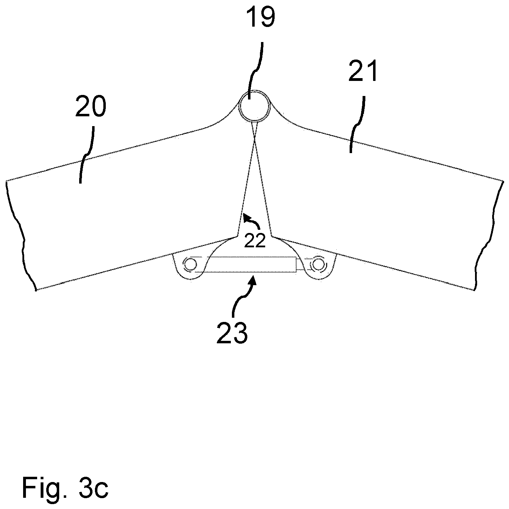

Die Gelenke 19 sind als Scharniergelenke am oberen Rand der beiden Längsträgerabschnitte 20, 21 ausgebildet (Figur 3a-3c). Im Bereich unterhalb der Scharniergelenke 19 sind die Längsträgerabschnitte 20, 21 mit ihren Stirnseiten 22 schräg verlaufend ausgebildet, so dass die Längsträgerabschnitte im Bereich der Gelenke 19 sowohl nach unten (Figur 3a) als auch nach oben (Figur 3c) abgewinkelt werden können. An der Unterseite der Längsträgerabschnitte 20, 21 ist eine hydraulische Zylinder-Kolbeneinheit derart angeordnet, dass sie den Gelenkbereich des Schwenkgelenkes überspannt, um mit jeweils einem Ende am vorderen Längsträgerabschnitt 20 und am hinteren Längsträgerabschnitt 21 befestigt ist. Mit der Zylinder-/Kolbeneinheit 23 können die beiden Längsträgerabschnitte 20, 21 um das Scharniergelenk 19 geschwenkt bzw. abgewinkelt werden.

Die Zylinder-/Kolbeneinheit 23 kann verriegelbar ausgebildet sein. Derartige hydraulische und verriegelbare Zylinder-/Kolbeneinheiten sind von der Firma Neumeister Hydraulik in Neuenstadt erhältlich.

Die obere Ladeebene 9 des Anhängers 2 ist im Wesentlichen genauso ausgebildet wie die obere Ladeebene 9 des Lastkraftwagens. Bei der oberen Ladeebene 9 des Anhängers 2 ist das Gelenk 19 bezüglich der Längsmitte der Längsträger 12 ein Stück nach vorne versetzt.

Die obere Ladeebene 9 des Anhängers 2 wird mittels zweier Kniegelenkstützen 24, 25 von unten gestützt, welche jeweils mit einem Kniehebel 26, 27 ein Kniegelenk ausbilden. Die vordere Kniegelenkstütze 24 ist mit dem Längsträger 12 mit einem schwenkbaren Festlager 28 und die hintere Kniegelenkstütze 25 mit dem Längsträger 12 mit einem schwenkbaren Loslager 29 verbunden, so dass das Loslager 29 ein Stück entlang dem Längsträger 12 beim Anheben und Absenken desselben gleiten kann.

Die Kniehebel 26, 27 sind jeweils mit einem ortsfesten Schwenklager 30, 31 am Chassis 3 des Anhängers 2 befestigt.

Die Kniehebel 26, 27 sind mit ihrem jeweils anderen Ende etwa im Bereich der Längsmitte an den entsprechenden Kniegelenkstützen 24, 25 schwenkbar befestigt. Die Kniegelenkstützen 24, 25 sind mit ihren vom Längsträger 12 entfernten Enden jeweils an einem schwenkbare Fußpunktgelenk 32, 33 am Chassis 3 des Anhängers 2 befestigt. Die Position der Fußpunktgelenke 32, 33 ist in Längsrichtung mittels eines entsprechenden Linearantriebes 34, 35 einstellbar. Dieser Linearantrieb 34, 35 kann bspw. eine hydraulisch betätigbare Zylinder-/Kolbeneinheit oder ein mittels eines Elektromotors betätigbare Spindelantrieb sein. Durch Verschieben des jeweiligen Fußpunktgelenkes 32, 33 wird die entsprechende Kniegelenkstütze 24, 25 in eine Horizontalposition abgesenkt (Figur 1) bzw. aus der horizontalen Position ein Stück in Richtung einer vertikalen Position aufgestellt, so dass die obere Ladeebene 9 angehoben wird. Die beiden Kniegelenkstützen 24, 25 können unabhängig voneinander betätigt werden.

Bei den in Figur 1 gezeigten Anordnungen der oberen Ladeebene 9 sind diese sowohl am Lastkraftwagen 1 als auch am Anhänger 2 soweit abgesenkt, dass sie auf der jeweils unteren Ladenebene 8 aufliegen. Die hinteren Längsträgerabschnitte 21 des Anhängers 2 sind vom Gelenk 19 in Richtung zum hinteren Ende durch Abknicken des Längsträgers 2 im Bereich des Gelenkes 19 abgesenkt. Der vordere Längsträgerabschnitt 20 liegt horizontal auf der unteren Ladeebene 8 bzw. dem Chassis 3 auf. Der hintere Längsträgerabschnitt 21 ist vom Gelenk 19 in Richtung zum hinteren Ende abfallend angeordnet. Aus dem hinteren Ende des Anhängers ausziehbare Auffahrschienen 36 sind ausgezogen und liegen mit ihrem freien Ende am Untergrund auf.

Die rückwärtige Plattform 13 des Lastkraftwagens 1 ist ein Stück nach hinten verschoben und die daran ausgebildete Ladestütze 14 ausgezogen, so dass die Ladestütze 14 fast bis zur vorderen Plattform 13 des Anhängers 2 reicht.

Über die Auffahrschiene 36, den Plattformen 13 des Anhängers 2, der Ladestütze 14 und den Plattformen 13 des Lastkraftwagens 1 wird somit eine ununterbrochene Überfahrt gebildet, so dass ein Fahrzeug über die Auffahrschiene 36, den Anhänger 2 auf die Plattformen 13 des Lastkraftwagens 1 auffahren kann. Könnte man die Längsträger 12 des Anhängers 2 nicht so abknicken, wie es in Figur 1 gezeigt ist, dann müsste man die gesamte obere Ladeebene 9 des Anhängers 2 schräg anordnen, um keinen zu großen Winkel zu den Auffahrschienen 36 auszubilden. Hierdurch wäre das vordere Ende der Längsträger 12 bzw. der oberen Ladeebene 9 des Anhängers 2 ein Stück weiter oben, so dass keine durchgängige Überfahrt zu der vollständig abgesenkten oberen Ladeebene 9 des Lastkraftwagens 1 möglich wäre. Hierdurch müsste die obere Ladeebene 9 des Lastkraftwagens 1 weiter oben angeordnet werden, was nachteilig ist. Durch das Abknicken der Längsträger 12 des Anhängers 2 ist es somit möglich, eine kontinuierliche Überfahrt zu schaffen, wobei die maximale Höhe der oberen Ladeebene 9 sehr gering ist. Im vorliegenden Ausführungsbeispiel beträgt sie ca. 1,3 m.

Zudem können bei einer so weit absenkbaren oberen Ladeebene 9 hochaufragende Fahrzeuge, wie zum Beispiel Kastenwagen 37, wie es in Figur 1 gezeigt ist, transportiert und die gesetzlichen Anforderungen an die maximale Ladehöhe eingehalten werden.

Figur 2 zeigt den Lastzug aus Figur 1 mit acht SUVs 38 beladen. Bei SUVs besteht das Problem, dass sie im Vergleich zu herkömmlichen Personenwagen wesentlich höher sind, so dass bei paralleler Ausrichtung der unteren und oberen Ladeebene 8, 9 die maximale Höhenbegrenzung der Beladung oftmals nicht eingehalten werden kann.

Bei der Anordnung gemäß Figur 2 ist das Gelenk 19 der Längsträger 12 des Lastkraftwagens 1 ein Stück abgesenkt, so dass die beiden Längsträgerabschnitte 20, 21 jeweils von der Längsmitte des Längsträgers nach vorne bzw. nach hinten ansteigend angeordnet sind. Die SUVs auf der unteren Ladeebene 8 des Lastkraftwagens sind mit ihrer Front jeweils zueinander weisend angeordnet, so dass die obere Ladeebene 9 mit dem Bereich um das Gelenk 19 sich in den Freiraum über den Motorhauben der SUVs 38 erstreckt, welche auf der unteren Ladeebene 8 stehen. Die SUVs 38 auf der oberen Ladeebene sind mit ihrem Heck jeweils zueinander ausgerichtet. Hierdurch sind sie mit ihrer Front bezüglich des Hecks ein Stück angehoben. Da die Front mit der Motorhaube niedriger als das Heck der SUVs ist, wird so sichergestellt, dass die maximale Beladungshöhe nicht überschritten wird.

Der Anhänger 2 ist etwas kürzer als der Lastkraftwagen 1, so dass es zweckmäßig ist, einen der SUVs 38 auf der unteren Ladeebene 8 des Anhängers 2 schrägzustellen. Hierzu wird ein Abschnitt der Plattform 10 ein Stück nach oben geschwenkt, auf dem eines der SUVs 38 mit seinen vorderen Rädern steht. Die vordere Plattform 13 der oberen Ladeebene 9 des Anhängers 2 ist mit ihrem rückwärtigen Ende ein Stück nach oben geschwenkt, so dass ein hierauf befindliches SUV etwa parallel zu dem darunter befindlichen SUV angeordnet ist. Das Gelenk 19 der Längsträger 12 des Anhängers 2 ist ein Stück abgesenkt, so dass die Längsträgerabschnitte 20, 21 jeweils vom Gelenk 19 nach vorne bzw. nach hinten ein Stück ansteigen. Hierdurch kann ein auf der rückwärtigen Plattform 13 der oberen Ladeebene 9 des Anhängers 2 befindliches SUV mit seiner Front unter die Front des auf der vorderen Plattform 13 der oberen Ladeebene 9 befindlichen SUVs einfahren und den Raum oberhalb der Front des SUVs 38 auf der hinteren Plattform 10 der unteren Ladeebene 8 nutzen. Die rückwärtigen Enden der beiden hinteren SUVs 38 des Anhängers 2 stehen jeweils auf einer Ladestütze 11, 14.

Das Knicken bzw. Abwinkeln der Längsträger 12 erlaubt somit eine sehr kompakte Anordnung von SUVs in zwei Ebenen auf einem Lastzug, wobei der Ladebereich des Lastzuges vollständig genutzt wird.

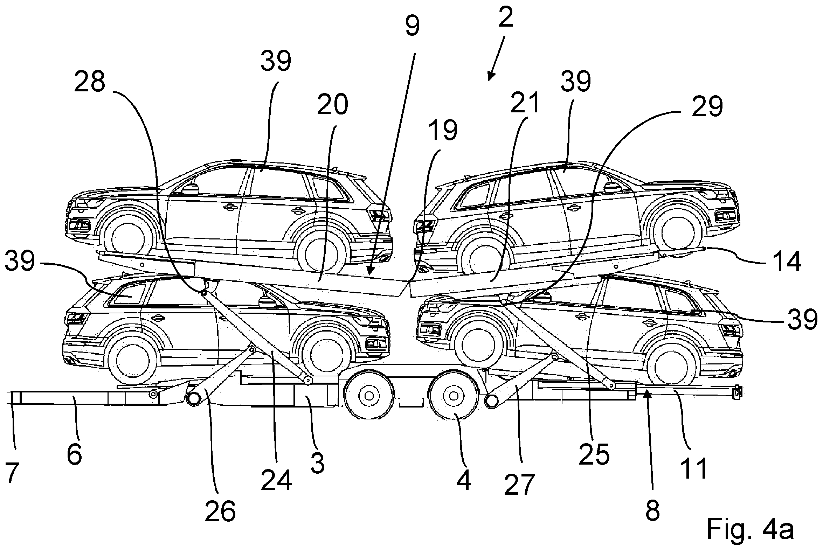

Die Figuren 4a-4f zeigen den Anhänger 2 mit unterschiedlichen Beladungen, wobei durch das Abknicken bzw. Abwinkeln der Längsträger 12 der Beladebereich optimal genutzt wird.

Gemäß Figur 4a können auf den Anhänger 2 vier große Kombis 39 geladen werden, wobei das Gelenk 19 abgesenkt wird, um den Raum über den Motorhauben der unteren Kombis 39 zur Aufnahme der hochaufragenden Heckbereiche der auf der oberen Ladeebene 9 angeordneten Kombis 39 zu nutzen.

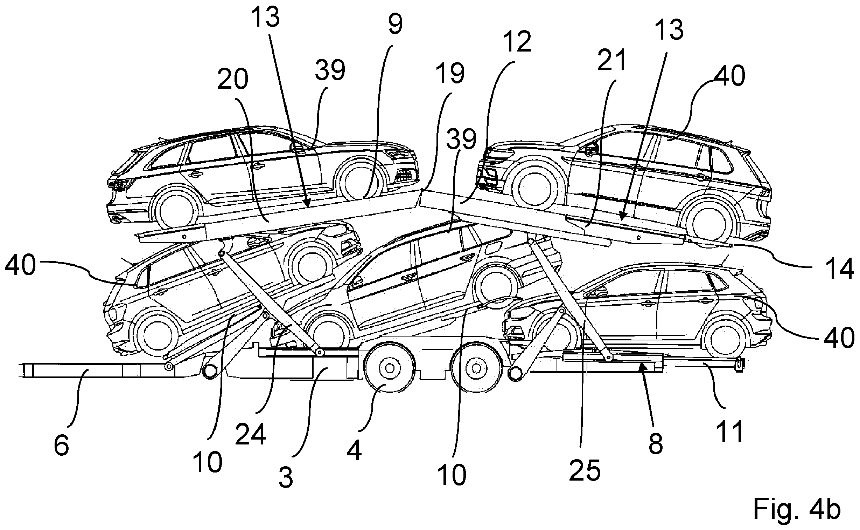

Figur 4b zeigt eine Beladung mit fünf Fahrzeugen, worunter sich zwei Kombis 39 und drei etwas kompaktere Kraftfahrzeuge 40 befinden. Hierbei ist das Gelenk 19 der Längsträger 12 ein Stück angehoben, so dass auf der unteren Ladeebene 8 Platz zum Anordnen von drei Fahrzeugen 39, 40 geschaffen wird, wobei zwei von diesen drei Fahrzeugen durch die erhöhte Anordnung der oberen Ladeebene 9 im mittigen Bereich schräggestellt werden können. Diese Schrägstellung wird durch ein entsprechendes nach oben Schwenken der entsprechenden Plattformen 10 der unteren Ladeebene 8 erzielt.

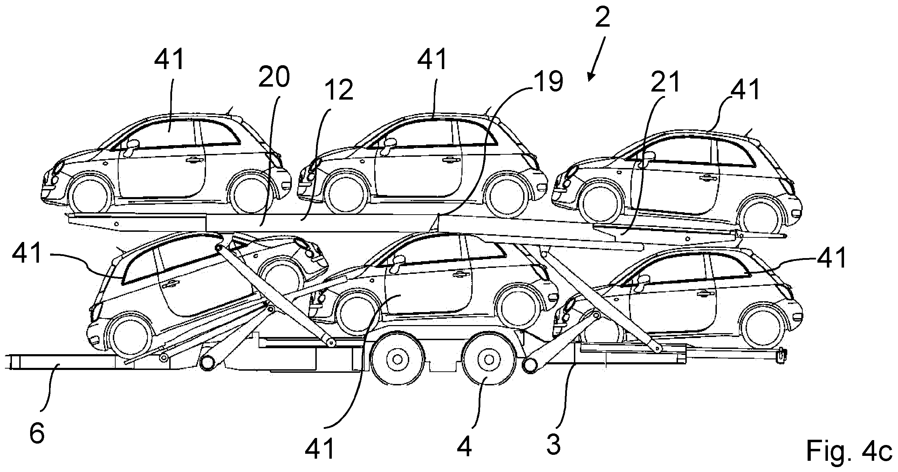

Figur 4c zeigt eine Beladung des Anhängers 2 mit sechs Kleinwagen 41, wobei der hintere Längsträgerabschnitt 21 mit seinem rückwärtigem Ende nach unten zeigend gegenüber dem vorderen Abschnitt 20 geneigt ist. Hierdurch wird der Schwerpunkt der Ladung etwas abgesenkt.

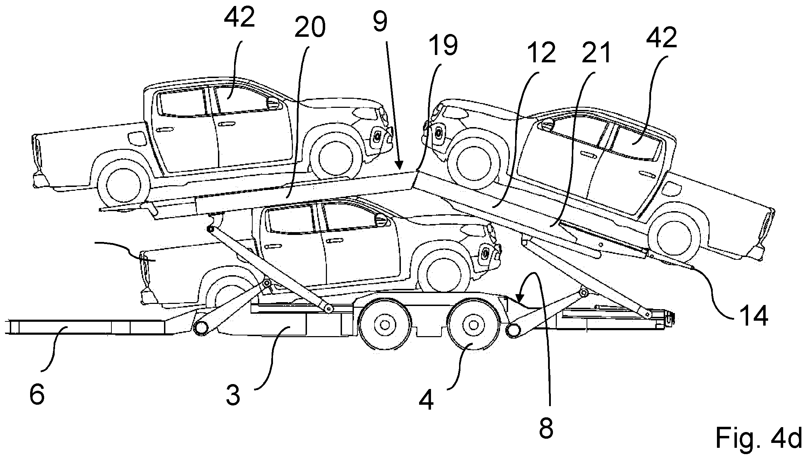

Figur 4d zeigt die Beladung des Anhängers 2 mit drei großen Pickup-Fahrzeugen 42. Hierbei ist ein Pickup-Fahrzeug 42 auf der unteren Ladeebene 8 und sind zwei Pickup-Fahrzeuge 42 auf der oberen Ladeebene 9 angeordnet. Bei der oberen Ladeebene 9 ist das Gelenk 19 ein Stück nach oben angehoben, so dass die Längsträgerabschnitte 20, 21 sich vom Gelenk 19 nach vorne bzw. nach hinten absenken. Die beiden Pickup-Fahrzeuge 42 auf der oberen Ladeebene 9 sind jeweils mit ihrer Front in Richtung zum Gelenk 19 weisend angeordnet. Hierdurch kann das Heck der Pickup-Fahrzeuge 42, das erheblich an der jeweiligen Hinterachse übersteht, am vorderen bzw. hinteren Rand des Anhängers 2 vorstehen. Die Pickup-Fahrzeuge 42 weisen Fahrgastzellen auf, welche hoch aufragen. Diese Fahrgastzellen befinden sich in den abfallenden Bereichen der Längsträgerabschnitte 20, 21, so dass sichergestellt ist, dass sie nicht die maximale Beladungshöhe überschreiten.

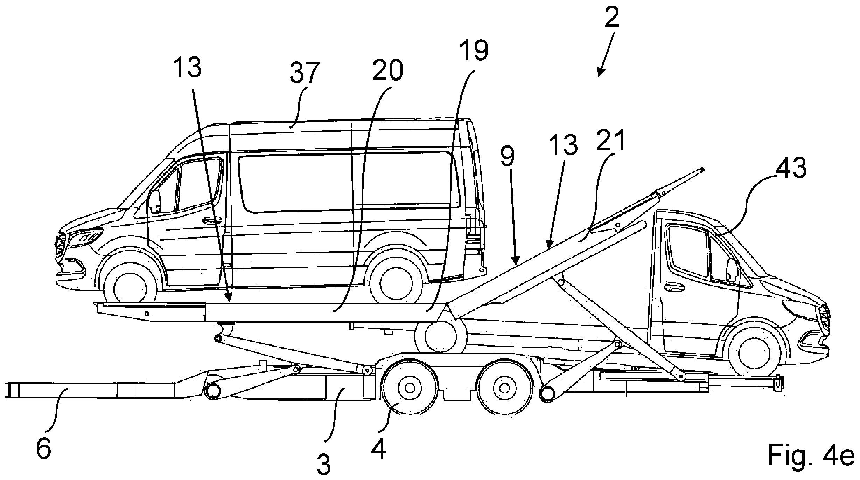

Figur 4e zeigt eine Beladung des Anhängers 2 mit einem Kleinbus 37 und einem Transportlastwagen 43 ohne Aufbau. Der Transportlastwagen 43 befindet sich auf der unteren Ladeebene mit seinem Führerhaus nach rückwärts weisend angeordnet. Die obere Ladeebene 9 ist ein Stück abgesenkt, wobei durch Abwinkeln des Gelenkes 19 der Längsträger 12 die vordere Plattform 13 zwischen den vorderen Längsträgerabschnitten 20 etwa horizontal angeordnet ist und die hintere Plattform 13 und die hinteren Längsträgerabschnitte 21 nach rückwärts aufragend angeordnet sind. Hierdurch wird genügend Raum zur Aufnahme des Fahrerhauses des Transportlastwagens 43 auf der unteren Ladeebene 8 geschaffen und die obere Ladeebene 9 kann mit seiner vorderen Plattform 13 so weit abgesenkt werden, dass hierauf der Kleinbus 37 angeordnet werden kann, ohne die zulässige Beladungshöhe zu überschreiten. Hierbei kann es zweckmäßig sein, die hintere Plattform 13 der oberen Ladeebene 9 ein Stück nach hinten zu verfahren, so dass in dem zum Gelenk 19 benachbarten Bereich ausreichend Freiraum zur Aufnahme eines Teils des auf der oberen Ladeebene 9 befindlichen Fahrzeuges (hier: Heck des Kleinbusses 37) geschaffen wird.

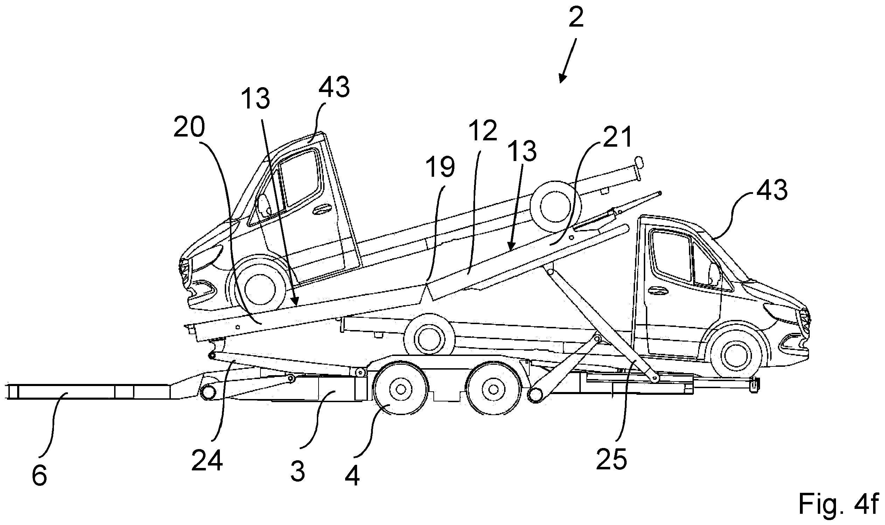

Eine ähnliche Beladung mit zwei Transportlastwagen 43 ohne Aufbau ist in Figur 4f gezeigt, wobei der Transportlastwagen 43 auf der oberen Ladeebene 9 mit seiner Vorderachse auf der vorderen Plattform 13 und mit seiner Hinterachse auf der hinteren Plattform 13 der oberen Ladeebene 9 angeordnet ist, welche derart gestellt und abgewinkelt ist, dass sie den Freiraum über dem auf der unteren Ladeebene 8 angeordneten Transportlastwagen 43 optimal nutzt.

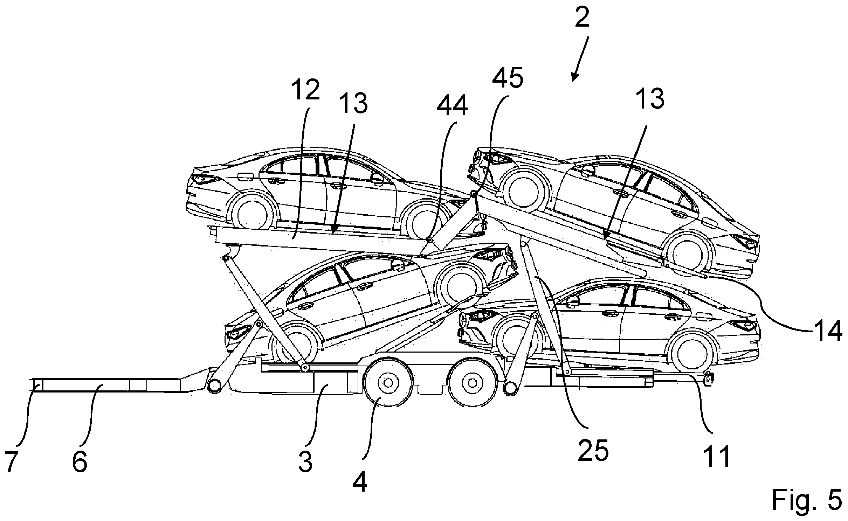

Ein weiteres Ausführungsbeispiel eines Fahrzeugtransporters, der als Anhänger 2 ausgebildet ist, ist in Figur 5 gezeigt. Dieser Anhänger 2 ist im Wesentlichen genauso ausgebildet, wie der Anhänger 2 des oben erläuterten ersten Ausführungsbeispiels. Die Längsträger 12 weisen jedoch zwei Gelenke 44, 45 auf, so dass die vordere und hintere Plattform 13 der oberen Ladeebene 9 auch im Bereich der Längsmitte der Längsträger 12 in Vertikalrichtung ein Stück versetzt zueinander angeordnet werden können, ohne dass ein Schwenken der Plattformen 13 bezüglich der Längsträger bzw. der entsprechenden Längsträgerabschnitte notwendig ist. Die beiden Plattformen bilden somit eine Art Stufe aus. Bei diesem Ausführungsbeispiel können die Plattformen 13 der oberen Ladeebene 9 starr mit den entsprechenden Längsträgerabschnitten verbunden sein, d.h., dass sie nicht gegenüber den entsprechenden Längsträgerabschnitten schwenkbar ausgebildet sein müssen.

### Bezugszeichenliste

- 1: Lastkraftwagen
- 2: Anhänger
- 3: Chassis
- 4: Rad
- 5: Führerhaus
- 6: Deichsel
- 7: Kupplung
- 8: Untere Ladeebene
- 9: Obere Ladeebene
- 10: Plattform
- 11: Ladestütze
- 12: Längsträger
- 13: Plattform
- 14: Ladestütze
- 15: Hubsäule
- 16: Stütze
- 17: Loslager
- 18: Schwenkgelenk
- 19: Gelenk
- 20: Vorderer Längsträgerabschnitt
- 21: Hinterer Längsträgerabschnitt
- 22: Stirnseite
- 23: Zylinder-/Kolbeneinheit
- 24: Kniegelenkstütze
- 25: Kniegelenkstütze
- 26: Kniehebel
- 27: Kniehebel
- 28: Festlager
- 29: Loslager
- 30: Schwenklager
- 31: Schwenklager
- 32: Fußpunktgelenk
- 33: Fußpunktgelenk
- 34: Linearantrieb
- 35: Linearantrieb
- 36: Auffahrschiene
- 37: Kastenwagen
- 38: SUV
- 39: Kombi
- 40: Kraftfahrzeug
- 41: Kleinwagen
- 42: Pickup-Fahrzeug
- 43: Transportlastwagen
- 44: Gelenk
- 45: Gelenk

## Patentansprüche

1. Fahrzeugtransporter mit einer unteren und zumindest einer oberen Ladeebene (8, 9), wobei die obere Ladeebene (9) umfasst
- zumindest eine Trageinrichtung (13) zum Aufnehmen von Fahrzeugen (37, 38, 39, 40, 41, 42),
- zwei parallel verlaufende Längsträger (12), welche etwa in Längsrichtung des Fahrzeugtransporters (1, 2) verlaufen und zwischen welchen die Trageinrichtung (13) angeordnet und daran befestigt ist,
- zumindest eine vordere Stützeinrichtung (15, 24) und zumindest eine hintere Stützeinrichtung (16, 25), welche die Längsträger (12) stützen,
- wobei die Längsträger (12) schwenkbar mit den Stützeinrichtungen (15, 16, 24, 25) verbunden sind,
wobei die Längsträger (12) jeweils ein Gelenk (19) aufweisen, welche in Querrichtung des Fahrzeugtransporters (1, 2) einander gegenüberliegend und im Bereich zwischen der vorderen Stützeinrichtung (15, 24) und der hinteren Stützeinrichtung (16, 25) angeordnet sind,
**dadurch gekennzeichnet,**
**dass** die Gelenke (19) mit einer Fixiereinrichtung zum Fixieren der Gelenkposition fixierbar ausgebildet sind.

2. Fahrzeugtransporter nach Anspruch 1,
**dadurch gekennzeichnet,**
**dass** ein Knickaktuator (23) zum gesteuerten Abwinkeln der Längsträger (12) vorgesehen ist.

3. Fahrzeugtransporter nach Anspruch 1 oder 2,
**dadurch gekennzeichnet,**
die Längsträger (12) jeweils einen vorderen und einen hinteren Längsträgerabschnitt (20, 21) aufweisen, welche mit dem Gelenk (19) verbunden sind, und die Trageinrichtung (13) zumindest eine vordere und eine hintere Plattform (13) umfasst, wobei die vordere Plattform (13) an den vorderen Längsträgerabschnitten (20) und die hintere Plattform (13) an den hinteren Längsträgerabschnitten (21) befestigt ist.

4. Fahrzeugtransporter nach Anspruch 3,
**dadurch gekennzeichnet,**
**dass** zumindest eine der Plattformen (10, 13) schwenkbar befestigt ist, und/oder in Längsrichtung verschiebbar ist,
und/oder
mit ausziehbaren Schienen versehen ist.

5. Fahrzeugtransporter nach Anspruch 3 oder 4,
**dadurch gekennzeichnet,**
**dass** die vorderen oder hinteren Längsträgerabschnitte (20, 21) mit einem Festlager (28) und die entsprechend anderen Längsträgerabschnitte mit einem Loslager (29) an den Stützeinrichtungen (15, 16, 24, 25) befestigt sind.

6. Fahrzeugtransporter nach einem der Ansprüche 1 bis 5,
**dadurch gekennzeichnet,**
die Stützeinrichtungen (15, 16, 24, 25) in der Höhe verstellbar sind.

7. Fahrzeugtransporter nach einem der Ansprüche 1 bis 6,
**dadurch gekennzeichnet,**
die Stützeinrichtungen (15, 16, 24, 25) die Längsträger (12) von unten stützt.

8. Fahrzeugtransporter nach einem der Ansprüche 1 bis 7,
**dadurch gekennzeichnet,**
**dass** ein jeder der Längsträger (12) zumindest zwei Gelenke (44, 45) aufweist.

9. Fahrzeugtransporter nach einem der Ansprüche 1 bis 8,
**dadurch gekennzeichnet,**
**dass** die Längsträger (12) teleskopierbar sind.

10. Fahrzeugtransporter nach einem der Ansprüche 1 bis 9,
**dadurch gekennzeichnet,**
**dass** die Stützeinrichtungen (15, 16, 24, 25) Säulen und/oder Wandungen umfassen.

## Claims

1. A vehicle transporter having a lower and at least one upper loading deck (8, 9), the upper loading deck (9) comprising
- at least one carrying device (13) for receiving vehicles (37, 38, 39, 40, 41, 42),
- two parallel longitudinal beams (12), which extend approximately in the longitudinal direction of the vehicle transporter (1, 2) and between which the carrying device (13) is arranged and fastened thereto,
- at least one front supporting device (15, 24) and at least one rear supporting device (16, 25), which support the longitudinal beams (12),
- the longitudinal beams (12) being pivotally connected to the supporting devices (15, 16, 24, 25),
the longitudinal beams (12) each having a joint (19), which are arranged opposite one another in the transverse direction of the vehicle transporter (1, 2) and in the region between the front supporting device (15, 24) and the rear supporting device (16, 25),
**characterized in that**
the joints (19) are designed to be fixable with a fixing device for fixing the joint position.

2. The vehicle transporter according to claim 1,
**characterized in that**
an articulated actuator (23) is provided for controlled angling of the longitudinal beams (12).

3. The vehicle transporter according to claim 1 or 2,
**characterized in that**
the longitudinal beams (12) each have a front and a rear longitudinal beam section (20, 21) which are connected to the joint (19), and the carrying device (13) comprises at least a front and a rear platform (13), the front platform (13) being fastened to the front longitudinal beam sections (20) and the rear platform (13) being fastened to the rear longitudinal beam sections (21).

4. The vehicle transporter according to claim 3,
**characterized in that**
at least one of the platforms (10, 13) is pivotally mounted and/or is longitudinally displaceable, and/or
is provided with extendable rails.

5. The vehicle transporter according to claim 3 or 4,
**characterized in that**
the front or rear longitudinal beam sections (20, 21) are fastened to the supporting devices (15, 16, 24, 25) by means of a fixed bearing (28) and the respectively other longitudinal beam sections are fastened to the supporting devices (15, 16, 24, 25) by means of a floating bearing (29).

6. The vehicle transporter according to any of the claims 1 to 5,
**characterized in that**
the supporting devices (15, 16, 24, 25) are adjustable in height.

7. The vehicle transporter according to any of the claims 1 to 6,
**characterized in that**
the supporting devices (15, 16, 24, 25) support the longitudinal beams (12) from below.

8. The vehicle transporter according to any of the claims 1 to 7,
**characterized in that**
each of the longitudinal beams (12) comprises at least two joints (44, 45).

9. The vehicle transporter according to any of the claims 1 to 8,
**characterized in that**
the longitudinal beams (12) are of telescopic design.

10. The vehicle transporter according to any of the claims 1 to 9,
**characterized in that**
the supporting devices (15, 16, 24, 25) comprise columns and/or walls.

## Revendications

1. Transporteur de véhicules présentant un plan de chargement inférieur et au moins un plan de chargement supérieur (8, 9), sachant que le plan de chargement supérieur (9) comprend
- au moins un dispositif porteur (13) destiné à recevoir des véhicules (37, 38, 39, 40, 41, 42),
- deux longerons (12) à extension parallèle, lesquels s'étendent approximativement en direction longitudinale du transporteur de véhicules (1, 2) et entre lesquels le dispositif porteur (13) est disposé et fixé à ceux-ci,
- au moins un dispositif de soutien avant (15, 24) et au moins un dispositif de soutien arrière (16, 25), lesquels soutiennent les longerons (12),
- sachant que les longerons (12) sont reliés de manière pivotable aux dispositifs de soutien (15, 16, 24, 25),
sachant que les longerons (12) présentent respectivement une articulation (19), lesquelles sont disposées en direction transversale du transporteur de véhicules (1, 2) de manière opposée l'une à l'autre et dans la zone entre le dispositif de soutien avant (15, 24) et le dispositif de soutien arrière (16, 25),
**caractérisé en ce que**
les articulations (19) sont constituées de manière arrêtables avec un dispositif d'arrêt destiné à arrêter la position d'articulation.

2. Transporteur de véhicules selon la revendication 1,
**caractérisé en ce que**
un actionneur de pliage (23) destiné à couder les longerons (12) de manière commandée est prévu.

3. Transporteur de véhicules selon la revendication 1 ou 2,
**caractérisé en ce que**
les longerons (12) présentent respectivement une section de longeron avant et une section de longeron arrière (20, 21), lesquelles sont reliées à l'articulation (19), et le dispositif porteur (13) comprend au moins une plateforme avant et une plateforme arrière (13), sachant que la plateforme avant (13) est fixée aux sections de longeron avant (20) et la plateforme arrière (13) est fixée aux sections de longeron arrière (21).

4. Transporteur de véhicules selon la revendication 3,
**caractérisé en ce que**
au moins une des plateformes (10, 13) est fixée de manière pivotable, et/ou déplaçable en direction longitudinale,
et/ou
est pourvue de rails extractibles.

5. Transporteur de véhicules selon la revendication 3 ou 4,
**caractérisé en ce que**
les sections de longeron avant ou arrière (20, 21) sont fixées aux dispositifs de soutien (15, 16, 24, 25) moyennant un palier fixe (28), et respectivement les autres sections de logeron sont fixées aux dispositifs de soutien (15, 16, 24, 25) moyennant un palier libre (29).

6. Transporteur de véhicules selon l'une des revendications 1 à 5,
**caractérisé en ce que**
les dispositifs de soutien (15, 16, 24, 25) sont réglables en hauteur.

7. Transporteur de véhicules selon l'une des revendications 1 à 6,
**caractérisé en ce que**
les dispositifs de soutien (15, 16, 24, 25) soutiennent les longerons (12) par le bas.

8. Transporteur de véhicules selon l'une des revendications 1 à 7,
**caractérisé en ce que**
chacun des longerons (12) présente au moins deux articulations (44, 45).

9. Transporteur de véhicules selon l'une des revendications 1 à 8,
**caractérisé en ce que**
les longerons (12) sont télescopiques.

10. Transporteur de véhicules selon l'une des revendications 1 à 9,
**caractérisé en ce que**
les dispositifs de soutien (15, 16, 24, 25) comprennent des colonnes et/ou des parois.
